# FASCICULE DE BREVET EUROPEEN

(11) **EP 1 907 330 B1**
(45) Date de publication et mention de la délivrance du brevet: **29.04.2009**
(21) Numéro de dépôt: 06777825.8
(22) Date de dépôt: 18.07.2006
(51) Int. Cl.: C03B 33/06, C03B 33/085, C03B 35/04

(54) **INSTALLATION POUR LA REALISATION D'OPERATIONS DE MISE EN FORME DE PIECES EN VERRE OU EN CRISTAL**
VORRICHTUNG ZUR DURCHFÜHRUNG VON ARBEITSGÄNGEN ZUM FORMEN VON GLAS- ODER KRISTALLTEILEN
INSTALLATION THAT IS USED TO PERFORM OPERATIONS FOR FORMING GLASS OR CRYSTAL PIECES

(30) Priorité: 18.07.2005 BE 200500361
(43) Date de publication de la demande: 09.04.2008
(73) Titulaire: Cuvelier, Georges, 7110 Houdeng-Goegnies (BE)
(72) Inventeur: Cuvelier, Georges, 7110 Houdeng-Goegnies (BE)
(74) Mandataire: Schmitz, Yvon
(86) Numéro de dépôt international: PCT/EP2006/064360
(87) Numéro de publication internationale: WO 2007/009985

(56) Documents cités:
- FR-A- 1 080 544
- US-A- 4 682 003
- US-A1- 2004 016 729
- US-B1- 6 438 996

## Description

La présente invention est relative à une installation pour la réalisation d'opérations de mise en forme de pièces en verre ou en cristal, comprenant
- au moins une roue d'entraînement et au moins une roue de renvoi,
- un élément de support entraîné en circulation par ladite au moins une roue d'entraînement de manière à défiler autour de ladite au moins une roue de renvoi et de ladite au moins une roue d'entraînement,
- des mandrins principaux en un nombre prédéterminé qui sont supportés par l'élément de support et qui, en position active, maintiennent chacun une pièce en verre ou en cristal par une première extrémité de celle-ci, et
- des postes de travail situés le long de l'élément de support en circulation, qui effectuent sur lesdites pièces en verre ou en cristal les opérations de mise en forme.
La présente invention a pour objet une installation pour la réalisation plus particulièrement d'opérations de découpe sur des pièces en verre ou en cristal, spécifiquement des articles de table ou de décoration.

Les articles en verre ou en cristal sont réalisés, en ce qui concerne la partie creuse, qui est appelée ci-après « la paraison » et est destinée à recevoir le contenu, par une déformation plastique à chaud de matière fondue, par des opérations de pressage ou de soufflage ou toute autre opération semblable générant une déformation plastique à chaud.

A cette partie creuse, on adjoint parfois un élément comme un pied, lui-même formé séparément, également à partir de matières fondues, et solidarisé à la partie creuse par une opération de soudage par mise en contact et refusion.

Il résulte de ces opérations généralement un article semi-fini constitué de l'article proprement dit, ci-après appelé « l'article », auquel est toujours attaché par l'extrémité ouverte de la partie creuse une masse de verre ou de cristal, ci-après appelée « la calotte », qui a servi à tenir l'article lors de la phase de mise en forme par déformation plastique à chaud.

Les opérations suivantes ont généralement pour but de séparer l'article proprement dit de la calotte et de donner à l'arête ainsi générée des propriétés mécaniques, de forme, de rugosité, de résistance, compatibles et souhaitables avec l'usage auquel l'article est destiné.

L'opération de décalottage de l'article proprement dit est classiquement réalisée par divers procédés qui font usage de divers appareillages de coupe, comme des brûleurs, des éléments diamantés, des molettes de carbure, ou des faisceaux laser.

Ces différents procédés nécessitent parfois pour leur mise en oeuvre un maintien de l'article aux deux extrémités, c'est-à-dire par son pied ou sa paraison et par la calotte.

Les procédés nécessitant la mise en oeuvre de deux mandrins de maintien sont classiquement mis en oeuvre sur des machines rondes, comportant un socle fixe, sur lequel est monté un carrousel pouvant être mis en rotation par rapport au socle fixe autour d'un axe vertical, situé sensiblement au centre de la machine (voir par exemple le brevet belge BE-A-903908). Le carrousel est divisé angulairement en un nombre déterminé de sections, toutes identiques, équipées d'éléments mécaniques adaptés à la préhension des articles à traiter; il s'agit la plupart du temps de mandrins rotatifs à trois ou quatre mors, destinés à maintenir l'article à l'endroit le plus adapté et à le mettre en rotation. Les articles sont chargés généralement automatiquement sur chaque section au fur et à mesure de la rotation du carrousel de telle sorte que, en fonctionnement normal, toutes les sections suivant le chargement et précédant le déchargement portent un article devant subir successivement toutes les opérations nécessaires à sa transformation entre l'endroit du chargement et celui du déchargement. Le déchargement est la plupart du temps automatique.

Les opérations nécessaires à la transformation de l'article sont réalisées par des équipements mécaniques, thermiques, par exemple des brûleurs ou autres, ou des éléments liés à la technologie des lasers, constituant les postes de travail successifs implantés de telle manière que, au moment où les opérations de transformation de l'article ont lieu, chaque poste de travail est positionné par rapport à une section de manière à pouvoir effectuer l'opération pour laquelle il a été conçu sur l'article maintenu dans cette section.

Dans le cas où les postes de travail sont liés au socle fixe de la machine, la rotation du carrousel est généralement séquentielle : la rotation est réalisée lors d'une phase d'indexage, non productive, qui est, en général, réalisée le plus rapidement possible; lors de cette phase d'indexage, l'angle de rotation est tel que l'avance de la chaîne correspond soit à la distance entre les axes de deux mandrins consécutifs, on dit alors que la machine est à simple indexage, soit à deux fois la distance entre les axes de deux mandrins consécutifs, on dit alors que la machine est à double indexage, soit à trois fois la distance entre les axes de deux mandrins consécutifs, on dit alors que la machine est à triple indexage. Le simple indexage est mis en oeuvre généralement sur des petites machines à production réduite. Le double et le triple indexages sont souvent mis en oeuvre car ils correspondent le plus souvent à un optimum économique; dans ces cas, les sections comportent deux fois ou trois fois les équipements de préhension des articles et les postes de travail comportent deux fois ou trois fois les équipements pour la réalisation des opérations. Un indexage quadruple ou de rang encore supérieur est rarement envisagé du fait de l'importance des machines à mettre en oeuvre. Les opérations sont réalisées alors que le carrousel est immobilisé de telle manière que chaque poste de travail fixe peut effectuer l'opération pour lequel il a été conçu sur un ou les articles maintenus dans une section.

Dans le cas où les postes de travail sont liés au carrousel, chaque section du carrousel se confond avec un poste de travail; le nombre de postes de travail est donc égal au nombre de sections, tous les postes de travail sont identiques et réalisent successivement, au cours de la rotation de la machine, toutes les opérations nécessaires à la transformation de l'article; dans ce cas, la rotation du carrousel est généralement continue.

Les machines rondes décrites ci-avant présentent plusieurs inconvénients :
- étant donné un espacement défini entre deux sections, le nombre de sections détermine le diamètre de la machine. Le nombre de sections est défini par le nombre, la complexité et le temps nécessaire à la réalisation des opérations : plus le nombre, la complexité et le temps nécessaire à la réalisation des opérations sont grands, plus le nombre de sections est élevé.
   Un diamètre de machine trop grand rend la machine trop encombrante, trop lourde, trop complexe à réaliser et donc trop chère. De plus, dans le cas des machines à rotation par indexage, l'inertie de la machine devient telle que la puissance à mettre en oeuvre pour réaliser cet indexage dans un temps suffisamment court devient très élevée, ce qui a tendance à augmenter encore la complexité et le coût de construction.
- dans le cas où les machines mettent en oeuvre des procédés qui nécessitent l'utilisation de deux mandrins opposés destinés à maintenir l'article par les deux extrémités, constituées de l'article proprement dit et de la calotte, il arrive qu'un des deux mandrins ne soit utilisé que pendant une faible fraction du temps nécessaire à la réalisation complète du processus de transformation de l'article sur une section.
   Il en résulte que, puisque sur une machine ronde toutes les sections doivent être identiques, sur chaque section, le mandrin concerné n'est utilisé proportionnellement que pendant la fraction de temps où il est nécessaire au processus complet; pendant le reste du temps, il est inactif.
- dans le cas d'un processus de décalottage nécessitant l'utilisation de deux mandrins opposés, destinés à maintenir l'article par les deux extrémités, l'évacuation de la calotte doit être réalisée par une installation annexe, un manipulateur ou un robot, qui doit soutenir et éloigner la calotte du centre de la machine, jusqu'à ce que cette calotte soit sortie de la zone de travail où se trouvent les mandrins.

On connaît par ailleurs des installations telles que celle indiquée au début (voir par exemple EP-B-0988255 et EP-B-1335884). Ces installations sont des machines à chaîne de transfert articulée. Cette chaîne de transfert porte les mandrins destinés à maintenir les articles; elle engrène dans une roue d'entraînement motorisée et une roue de renvoi; entre ces deux roues, la chaîne est sensiblement tendue en deux brins rectilignes guidés de manière adéquate. Les mandrins sont amenés successivement devant les différents postes de travail par un indexage, c'est-à-dire une rotation intermittente, induite par la roue d'entraînement, faisant avancer la chaîne de l'équivalent de une fois, deux fois, voire trois fois, mais rarement quatre fois ou plus, la distance entre deux mandrins successifs. Par rapport aux machines rondes, ces machines sont plus légères, elles prennent moins de place au sol et sont plus modulaires. Elles ont comme inconvénient de permettre uniquement la mise en oeuvre de procédés dans lesquels l'article est maintenu par un mandrin unique et dans lesquels la calotte est laissée libre, sans jamais être elle-même maintenue par un second mandrin.

La présente invention a pour but de remédier aux inconvénients cités précédemment et de mettre au point une installation qui conserve les avantages des machines à chaîne articulée.

On a résolu ce problème par une installation, telle qu'indiquée au début, dans laquelle au moins une roue parmi ladite au moins une roue d'entraînement et ladite au moins une roue de renvoi est un carrousel qui comporte des mandrins secondaires en un nombre inférieur au nombre prédéterminé des mandrins principaux et qui coopère, dans une zone de coopération, avec l'élément de support en défilement, et, dans cette zone de coopération, chaque mandrin secondaire est agencé en opposition à un mandrin principal sur un axe commun et maintient une pièce en verre ou en cristal par une deuxième extrémité de celle-ci, opposée à la première.

L'installation suivant l'invention comprend de préférence un socle fixe à une extrémité duquel est monté le carrousel comprenant un nombre réduit de sections. Sur chaque section de ce carrousel sont fixés les mandrins qui ne sont que partiellement utilisés au cours de la réalisation complète des opérations, c'est-à-dire "les mandrins secondaires". Les mandrins utilisés durant tout le temps de réalisation des opérations, dénommés "les mandrins principaux", sont montés sur ledit support qui en défilant coopère avec le carrousel au fur et à mesure de la rotation de celui-ci, de telle sorte que deux mandrins, un principal et un secondaire, sont opposés et alignés sur le même axe sensiblement vertical, avec une précision suffisante, dépendant des tolérances de construction, et constituent ainsi, dans l'angle de rotation du carrousel où le support portant les mandrins principaux coopère avec le carrousel, des sections complètes comportant à la fois un mandrin principal et un mandrin secondaire, en nombre suffisant pour pouvoir réaliser sur ces sections complètes toutes les opérations nécessitant l'utilisation de deux mandrins.

Après sa coopération avec le carrousel, le support s'éloigne du carrousel, guidé dans des éléments mécaniques adéquats, vers une roue de renvoi, de construction beaucoup plus simple que le carrousel portant les mandrins secondaires, par laquelle il est renvoyé vers le carrousel.

Le long du trajet parcouru en dehors du carrousel par le support, c'est-à-dire de la sortie du carrousel jusqu'à la roue de renvoi, le long du parcours où il coopère avec la roue de renvoi et sur le trajet de retour entre la sortie de la roue de renvoi jusqu'au carrousel, sont implantés les postes de travail ne nécessitant pas l'utilisation des mandrins secondaires, ainsi que les postes de chargement et de déchargement.

Une telle installation permet l'usage d'un carrousel de petit diamètre, donc peu encombrant et peu coûteux, tout en maintenant les avantages des machines à chaîne articulée, en particulier leur conception simple et modulaire.

Suivant une forme de réalisation de l'invention, les mandrins principaux sont montés sur l'élément de support et les mandrins secondaires sur chaque carrousel de manière à permettre, dans ladite zone de coopération, un déplacement relatif entre les mandrins opposés le long de leur axe commun, entre une position éloignée et une position rapprochée et inversement. Avantageusement, les mandrins principaux et les mandrins secondaires agencés en opposition sont montés de manière à pouvoir être entraînés en rotation de manière synchrone autour de leur axe commun. Ces agencements permettent une saisie précise des pièces à traiter dans les postes de travail demandant un maintien de celles-ci par leurs deux extrémités, ainsi qu'une rotation des pièces maintenues autour d'un axe de rotation précis.

Suivant une forme avantageuse de réalisation de l'invention, l'élément de support est une chaîne transporteuse sans fin et chaque carrousel comporte des moyens de coopération dans lesquels la chaîne transporteuse s'engrène dans ladite zone de coopération. On peut évidemment aussi concevoir d'autres formes d'élément de support capable de défiler entre la roue d'entraînement et la ou les roues de renvoi, comme par exemple une bande transporteuse.

Suivant une forme de réalisation de l'invention les postes de travail comprennent au moins un poste de découpage permettant un décalottage de la pièce en verre ou en cristal. Ces postes de découpage peuvent de préférence comprendre un dispositif à faisceau laser, mais on peut aussi prévoir des postes à découpe par diamants ou molettes au carbure ou à l'aide de brûleurs.

Avantageusement, l'installation comprend en outre, en amont du poste de découpage, au moins un poste de préchauffage des pièces à découper, et en aval du poste de découpage, au moins un poste de polissage d'arête découpée. Les moyens de préchauffe sont tout moyen approprié à cet effet, connu de l'homme de métier, par exemple des brûleurs. Les moyens de polissage d'arête peuvent par exemple être des brûleurs ou des instruments à faisceaux laser ou encore des moyens mécaniques courants de polissage.

L'installation peut en outre comprendre au moins un poste de contrôle de qualité et/ou au moins un poste de marquage ou de décoration de la pièce usinée.

Suivant une forme de réalisation préférée de l'invention, l'installation comprend un carrousel unique, formé par une roue d'entraînement, et une roue de renvoi unique.

On peut évidemment aussi prévoir suivant l'invention qu'une ou plusieurs roues de renvoi soient agencées également sous la forme d'un carrousel supplémentaire supportant des mandrins secondaires additionnels d'une manière identique ou semblable à l'agencement du carrousel formant la roue d'entraînement.

D'autres détails et particularités de l'invention ressortiront de la description donnée ci-après, à titre non limitatif et avec référence aux dessins annexés.
Les figures 1 et 2 représentent une vue en élévation latérale et une vue en plan d'une installation suivant l'invention.
La figure 3 représente une vue de profil d'une pièce en verre maintenue par les deux extrémités par des mandrins, au niveau du carrousel d'entraînement.
La figure 4 représente une vue en coupe, suivant la ligne IV-IV, de la figure 3.
Les figures 5 et 6 représentent des vues de profil et respectivement de face d'une pièce en verre maintenue par une extrémité par un mandrin, lorsque la chaîne de support ne coopère pas avec le carrousel.
La figure 7 représente une coupe, suivant la ligne VII-VII, de la figure 5.
Les figures 8 à 10 représentent de manière schématique trois variantes de réalisation d'installation suivant l'invention.

Sur les différents dessins, les éléments identiques ou analogues portent les mêmes références.

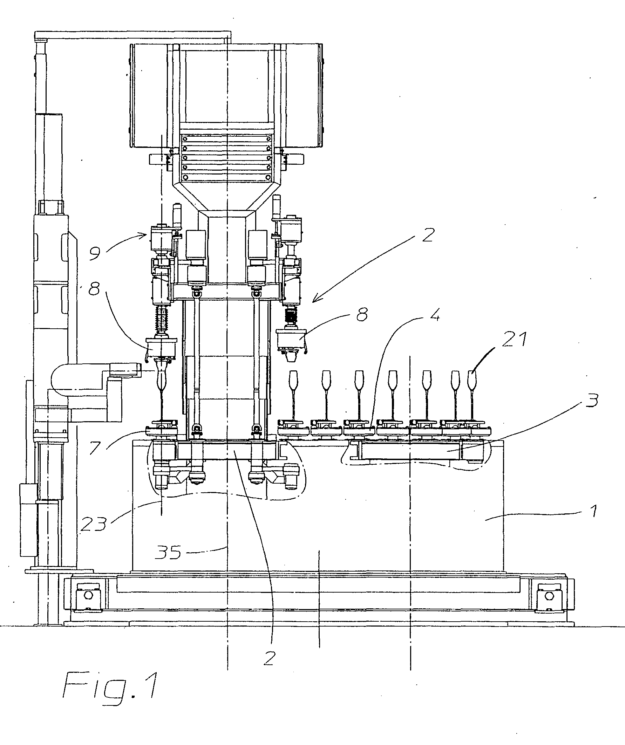

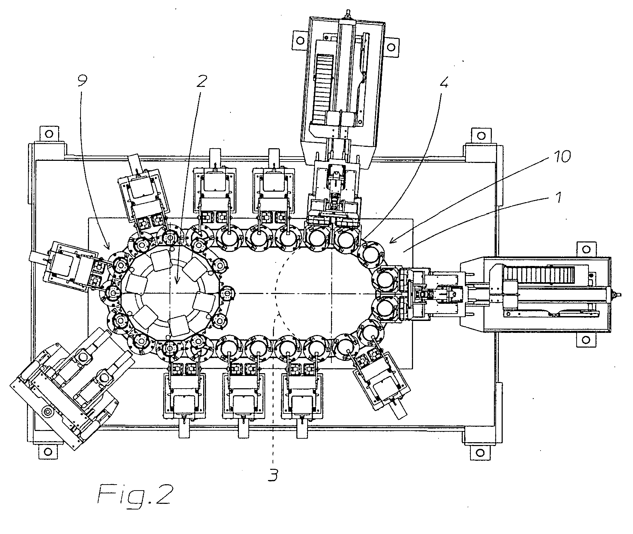

L'installation représentée sur les figures 1 et 2 comporte un socle 1 sur lequel sont montées une roue d'entraînement sous la forme d'un carrousel 2 et une roue de renvoi 3 représentée de manière schématique.

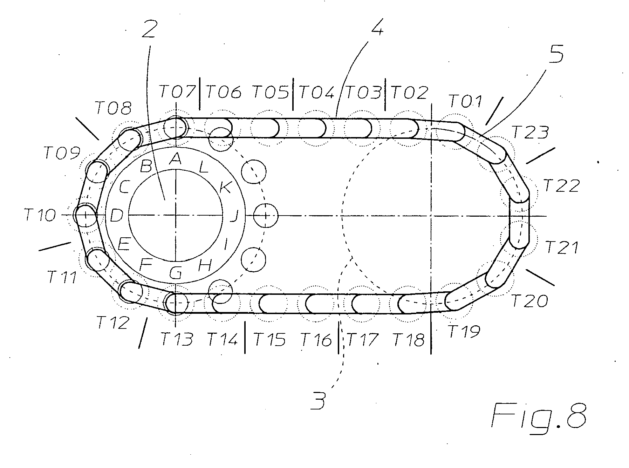

Le carrousel 2 comporte douze têtes 9. La rotation du carrousel 2 est réalisée autour de l'axe 35 par double indexage, c'est-à-dire que les équipements des sections et des postes de travail sont doublés et que, à chaque indexage, une tête 9 qui se trouvait, avant l'indexage, à la position i se trouve, après indexage, à la position i+2. Dans ce cas, l'angle de rotation à chaque indexage est de 360° divisé par 6, c'est-à-dire 60° et le carrousel 2 à douze têtes est en réalité composé de 6 sections doubles. Les positions où s'immobilisent les têtes 9 pour la réalisation des opérations sont repérées de A à L sur la figure 8.

Dans l'exemple illustré un élément de support en forme de chaîne articulée sans fin 4 est entraîné par le carrousel 2 et défile autour de celui-ci et de la roue de renvoi 2. La chaîne 4 comporte 23 maillons 5, et 23 mandrins principaux 7 sont montés sur cette chaîne concentriquement aux axes d'articulation 6 des maillons. Les mandrins principaux 7 sont montés ici dans la partie basse de l'installation et leur face de préhension est orientée vers le haut. Les positions où s'immobilisent les axes d'articulation 6 des maillons 5 de la chaîne 4 pour la réalisation des opérations sont numérotées de T01 à T23 sur la figure 8.

Chaque tête 9 du carrousel 2 porte un mandrin secondaire 8. Ces mandrins secondaires sont donc au nombre de douze. Ils sont montés dans cet exemple dans la partie haute de l'installation et leur face de préhension est orientée vers le bas. Ils sont montés sur un support mobile pouvant se déplacer le long d'un axe parallèle à l'axe du mandrin. Le déplacement parallèlement à son axe du mandrin secondaire est rendu nécessaire du fait du traitement d'articles de hauteurs différentes et également du fait que, au cours de certaines opérations, on impose un déplacement du mandrin secondaire 8 par rapport au mandrin principal 7 qui lui fait face. Le mandrin principal 7 et le mandrin secondaire 8 saisissant les deux extrémités de l'article 21 sont agencés coaxialement le long de l'axe 23.

La roue de renvoi 3 est également à douze têtes 10; il s'ensuit que les deux brins de la chaîne 4 reliant le carrousel 2 à la roue de renvoi 3 sont parallèles et que les angles de contact de la chaîne 4 avec le carrousel 2 et la roue de renvoi 3 sont de 180°.

A l'immobilisation, la chaîne 4 est engrenée dans le carrousel 2 dans une zone de coopération entre et y compris les positions A à G du carrousel 2 ou T07 à T13 de la chaîne 4, c'est-à-dire que sept têtes 9 sont engrenées. On peut donc réaliser sur trois postes de travail doubles, c'est-à-dire sur six des sept têtes 9 où la chaîne 4 est engrenée dans le carrousel 2, trois opérations nécessitant l'utilisation des mandrins secondaires 8.

A l'immobilisation, la chaîne 4 est également engrenée dans six têtes 10 de la roue de renvoi 3 et chacun des brins rectilignes de la chaîne 4 comporte cinq positions. Sur ces seize positions, on peut implanter au maximum huit postes de travail doubles sur lesquels on peut réaliser des opérations ne nécessitant pas l'utilisation des mandrins secondaires 8.

Dans le cas particulier des figures 1 et 2 ainsi que 8, l'installation réalise un décalottage des articles. La séquence des opérations est la suivante :
- Le poste de chargement est situé sur les positions T01 et T02, c'est-à-dire partiellement à la sortie de la roue de renvoi 3 et sur le brin rectiligne de la chaîne 4 qui retourne vers le carrousel 2. Sur ce poste, deux articles sont saisis chacun par un mandrin principal 7, par le pied ou le fond, la paraison ouverte vers le haut, la calotte 21 a constituant la partie supérieure de l'article 21.
- Sur les positions T03 et T04 est implanté un premier poste de travail double de préchauffage à l'aide de brûleurs adéquats.
- Sur les positions T05 et T06 est implanté un deuxième poste de travail double de préchauffage à l'aide de brûleurs adéquats.
- Sur les positions T07 et T08 est implanté un troisième poste de travail double de préchauffage à l'aide de brûleurs adéquats. Ces positions correspondant aux positions A et B du carrousel 2, des mandrins secondaires y sont disponibles. On profite du temps de travail sur ce poste pour saisir les deux articles 21 au niveau de leur calotte 21 a par les deux mandrins secondaires 8, dont les mors sont serrés autour de la calotte. Cela s'effectue par rapprochement du mandrin 8 depuis sa position éloignée, illustrée à droite du carrousel 2 sur la figure 1, jusqu'à sa position rapprochée, illustrée à gauche du carrousel sur cette figure.
- Sur les positions T09 et T10 est implanté un quatrième poste de travail double de préchauffage à l'aide de brûleurs adéquats. Sur ce poste, on réalise la dernière étape de préchauffage jusqu'à ce qu'un anneau de matière de l'article 21 situé de part et d'autre du plan théorique de découpe 22 devienne pâteux; à ce stade, on exerce sur le mandrin secondaire qui a saisi l'article par la calotte une force qui a tendance à l'éloigner d'une distance contrôlée du mandrin principal : l'anneau pâteux est ainsi étiré dans le sens de sa petite hauteur et a donc tendance à s'amincir.
- Sur les positions T11 et T12 est implanté le poste de travail double de découpe proprement dit à l'aide de deux faisceaux générés séparément par deux lasers comme illustré ou par un seul laser, le faisceau étant dans ce cas divisé également en deux par des éléments optiques adéquats. Sur ce poste, on continue à exercer sur le mandrin secondaire 8 qui a saisi l'article par la calotte 21 a une force qui a tendance à l'éloigner d'une distance contrôlée du mandrin principal 7; la séparation de la calotte 21 a de l'article 21 a lieu dès que l'action exercée par le faisceau laser a suffisamment diminué la résistance mécanique de la matière au niveau du plan théorique de découpe 22, c'est-à-dire dans ce cas, à un endroit de l'anneau de matière déjà aminci par l'opération précédente.
- Sur les positions T13 et T14 est implanté un premier poste de travail double de traitement de l'arête de l'article 21 générée par l'opération de découpe par un faisceau laser. Dans ce cas illustré, il s'agit d'un premier réchauffage par des brûleurs adéquats devant aboutir à ce qui est communément appelé un polissage à la flamme.
- Sur les positions T15 et T16 est implanté un deuxième poste de travail double permettant un deuxième réchauffage par des brûleurs adéquats devant aboutir à un polissage à la flamme.
- Sur les positions T17 et T18 est implanté un troisième poste de travail double permettant un troisième réchauffage par des brûleurs adéquats devant aboutir à un polissage à la flamme.
- Sur les positions T19 et T20 est implanté un poste de travail double de refroidissement de l'article 21, spécialement au voisinage de l'arête générée par l'opération précédente. Dans ce cas illustré, il s'agit d'un refroidissement à température plus basse, généralement la température ambiante.
- Le poste de déchargement est situé sur les positions T21 et T22. Sur ce poste, les deux articles sont libérés des mandrins principaux, en étant saisis, soit mécaniquement, soit par le vide fait à l'intérieur de la paraison, et transférés sur une installation de traitement ultérieur.
- La position 23 reste libre.

La position T13 est la dernière, dans le sens du défilement de la chaîne 4, où la chaîne 4 est engrenée dans le carrousel 2; à la position T14, le mandrin secondaire 8 lié au carrousel 2 a commencé à s'éloigner du mandrin principal 7 lié à la chaîne 4, et avec lui, la calotte 21 a qu'il continue à maintenir. Après l'indexage suivant, les deux mandrins secondaires portant les calottes 21 a sont, sur le carrousel 2, sur les positions I et J du carrousel 2. A cet endroit, la partie basse de l'installation est libre et il suffit d'ouvrir les mors des mandrins secondaires 8 pour que les calottes 21 a soient évacuées simplement en tombant dans une trémie ou toute autre installation de collecte courante, non représentée.

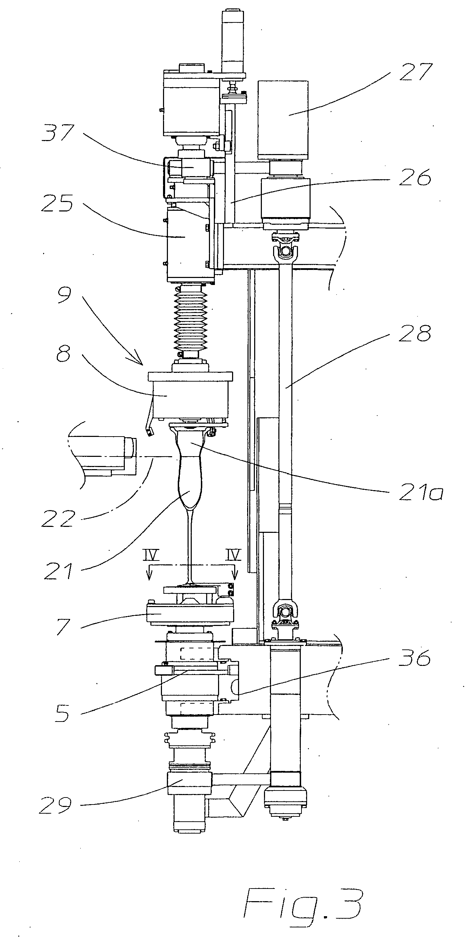

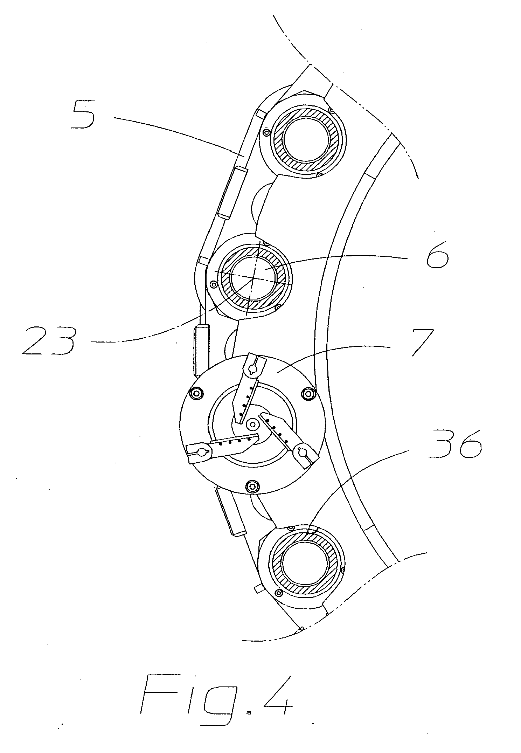

Les figures 3 et 4 montrent deux sections doubles comme celles évoquées lors de la description d'une installation à double indexage, illustrée par la figure 1. Elles sont localisées aux endroits où la chaîne 4 engrène dans le carrousel 2, c'est-à-dire là où chacun des mandrins principaux 7 solidaires de la chaîne 4 fait face à un mandrin secondaire 8 solidaire du carrousel 2. A chacun de ces endroits est réalisée une opération nécessitant l'utilisation des mandrins secondaires 8.

L'article 21, ici constitué d'un verre à pied, est maintenu au niveau du pied par un mandrin principal 7 et au niveau de la calotte 21 a par un mandrin secondaire 8. Les mandrins principaux 7 sont solidaires des maillons 5 de la chaîne 4 dont les axes d'articulation 6 sont engrenés à ce moment dans des logements 36 de chaque tête 9 prévue à cet effet dans le carrousel 2.

Les mandrins principaux 7 sont montés sur la chaîne 4 concentriquement aux axes d'articulation 6 des maillons 5 par l'intermédiaire de roulements qui permettent une rotation libre des mandrins par rapport aux maillons 5, autour d'un axe 23.

Les mandrins secondaires 8 sont montés sur le carrousel 2 par l'intermédiaire d'un palier 25 comportant également des roulements permettant une rotation libre de ceux-ci par rapport au carrousel 2, autour de l'axe 23 précité. Le palier 25 est lui-même fixé sur la partie mobile d'un guidage linéaire 26 dont l'axe de déplacement est sensiblement parallèle à l'axe de rotation 23 commun au mandrin principal 7 et au mandrin secondaire 8 correspondants.

Durant les opérations utilisant le mandrin secondaire 8, celui-ci peut être déplacé le long du guidage linéaire 26 par des moyens de commande courants sous l'effet, soit d'une force contrôlée, soit sous l'effet d'un déplacement imposé, de manière à obtenir, au cours de l'opération, l'effet escompté en ce qui concerne la transformation de l'article.

Durant une opération utilisant le mandrin secondaire 8, le mandrin principal 7 et le mandrin secondaire 8 sont généralement mis en rotation synchrone par l'intermédiaire d'un moteur 27 et d'une transmission 28 implantée sur le carrousel 2. La transmission 28 est, par l'intermédiaire d'un mécanisme 37, embrayée en permanence sur le mandrin secondaire 8, également implanté sur le carrousel 2. La transmission 28 est embrayée sur le mandrin principal 7, durant la période où la chaîne 4 est engrenée sur le carrousel 2, par l'intermédiaire d'un mécanisme 29, débrayable juste avant que l'axe d'articulation 6 des maillons 5 adjacents ne quitte le carrousel 2.

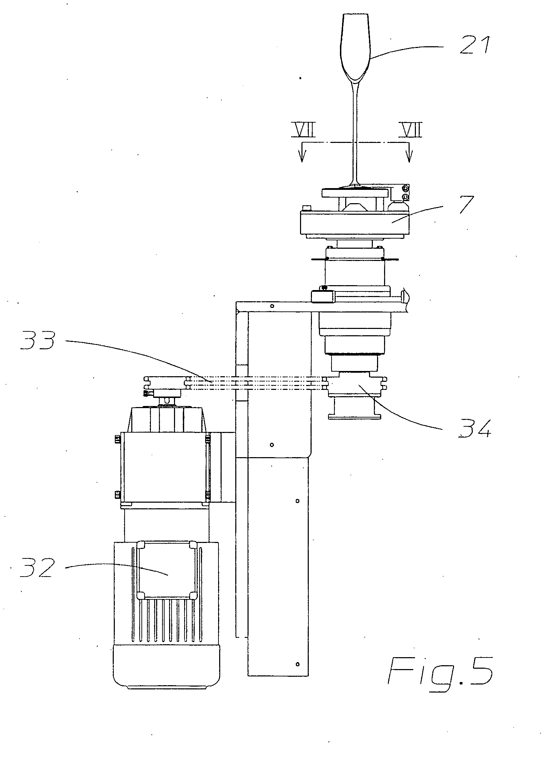

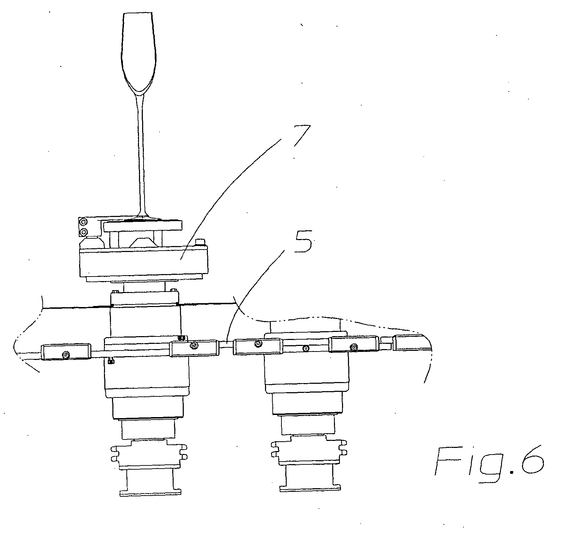

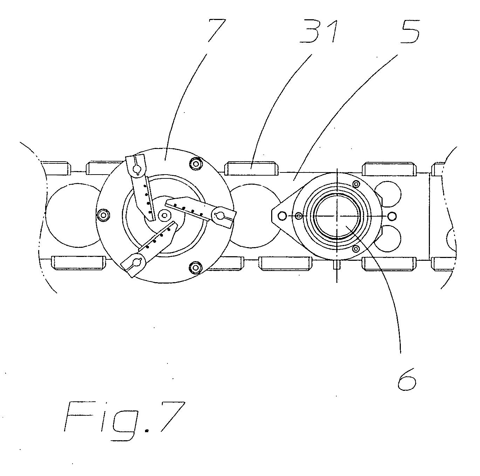

Les figures 5 à 7 montrent une section double comme celle évoquée lors de la description d'une installation à double indexage, illustrée par la figure 1. Cette section est localisée à un des endroits où la chaîne 4 se trouve entre le carrousel 2 et la roue de renvoi 3. A cet endroit, la chaîne est rectiligne et sensiblement tendue. Les maillons 5 sont maintenus par des guides 31.

Au moment où la chaîne 4 est arrêtée devant un poste de travail entre le carrousel 2 et la roue de renvoi 3, une opération ne nécessitant pas de mandrin secondaire 8 est réalisée. Seul le mandrin principal 7 est concerné. Il est en général mis en rotation autour de l'axe 6 par l'intermédiaire d'un moteur 32 et d'une transmission 33, tous deux implantés sur le poste de travail concerné.

Une fois la chaîne immobile, la transmission 33 est embrayée sur le mandrin principal 7 par l'intermédiaire d'un mécanisme 34, débrayable à la fin de l'opération réalisée sur ce poste, juste avant l'indexage suivant.

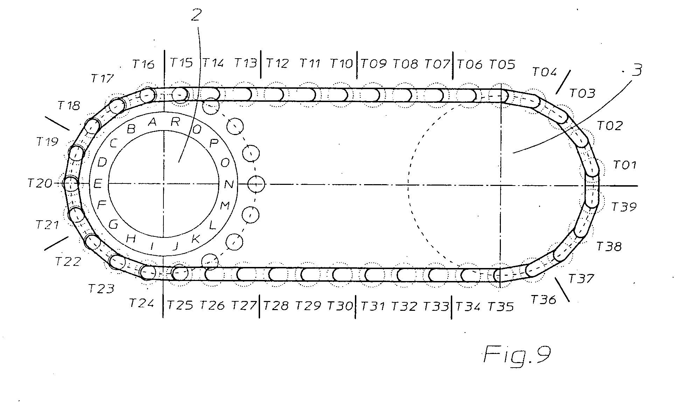

La figure 9 montre une autre réalisation possible de l'installation suivant l'invention.

Il s'agit d'une installation comportant un socle 1 sur lequel est monté un carrousel 2 à dix-huit têtes 9, dont un axe vertical de chaque tête constitue l'axe de rotation 23 commun aux éléments mécaniques adaptés à la préhension des articles ; les positions où s'immobilisent les têtes 9 pour la réalisation des opérations sont repérées de A à R. La rotation du carrousel 2 est réalisée par triple indexage, c'est-à-dire que les équipements des sections et des postes de travail sont triplés et qu'à chaque indexage, une tête 9 qui se trouvait, avant l'indexage, à la position i se trouve, après indexage, à la position i+3. Dans ce cas, l'angle de rotation à chaque indexage est de 360° divisé par 6, c'est-à-dire 60° comme dans le cas précédent et le carrousel 2 à dix-huit têtes est en réalité composé de 6 sections triples.

L'installation comporte également une chaîne 4 de trente-neuf maillons 5; les trente-neuf mandrins principaux 7 sont montés sur la chaîne 4 concentriquement aux axes d'articulation 6 des maillons 5. Les mandrins principaux 7 sont montés dans la partie basse d'installation et leur face de préhension est orientée vers le haut. Les positions où s'immobilisent les axes d'articulation 6 des maillons 5 de la chaîne 4 pour la réalisation des opérations sont numérotés de T01 à T39.

L'installation comporte également une roue de renvoi 3, également à dix-huit têtes 10 ; il s'ensuit que les deux brins de la chaîne 4 reliant le carrousel 2 à la roue de renvoi 3 sont parallèles et que les angles de contact de la chaîne 4 avec le carrousel 2 et la roue de renvoi 3 sont de 180°.

A l'immobilisation, la chaîne 4 est engrenée dans le carrousel 2 entre et y compris les positions A à I du carrousel 2 ou T16 à T24 de la chaîne 4, c'est-à-dire que neuf têtes 9 sont engrenées. On peut donc réaliser sur trois postes de travail triples, c'est-à-dire sur les neuf têtes 9 où la chaîne 4 est engrenée dans le carrousel 2, trois opérations nécessitant l'utilisation des mandrins secondaires 8.

A l'immobilisation, la chaîne 4 est engrenée dans dix têtes 10 de la roue de renvoi 3 et chacun des brins rectilignes de la chaîne 4 comporte dix positions. Sur ces trente positions, on peut implanter au maximum dix postes de travail triples sur lesquels on peut réaliser des opérations ne nécessitant pas l'utilisation des mandrins secondaires 8.

Le fonctionnement de cette installation est, en dehors de cela, du même type que l'installation suivant la figure 8.

Il doit être entendu que la présente invention n'est en aucune façon limitée aux formes de réalisation décrites ci-dessus et que bien des modifications peuvent y être apportées sans sortir du cadre des revendications annexées.

On imagine par exemple aisément une installation suivant l'invention à indexage simple et une installation à indexage quadruple.

On peut également imaginer que des installations comme celles précédemment décrites soient adaptées pour être, non plus des installations à rotation par indexage, mais des installations à rotation continue. Pour cela il faut que les toutes les opérations nécessaires pour la transformation de l'article 21 puissent être réalisées alors que la chaîne 4 est en mouvement continu. Cela est aisément envisageable pour les postes de travail équipés de brûleurs pour le préchauffage et le polissage à la flamme, également pour ceux équipés de gicleurs d'air pour le refroidissement : il suffit que les brûleurs et les gicleurs soient de type linéaire, disposés sensiblement parallèlement au défilé des articles 21 sur la chaîne 4, à la fois dans les parties droites et dans les parties courbes. Pour ce qui concerne le poste de découpage au laser, on peut, d'une manière connue, équiper les lasers d'optiques mobiles dont les déplacements sont pilotés par un système de supervision qui intègre dans son mode de gestion le déplacement de la chaîne 4.

On peut également envisager de pourvoir les roues de renvoi 3 d'équipements permettant de réaliser, aux endroits où la chaîne 4 engrène dans la roue de renvoi 3, des opérations connues telles que des postes de trempe par air comprimé ou des machines sur lesquelles les articles sont partiellement recuits et les bords, générés au préalable par une opération de crack-off , polis à la flamme.

On peut aussi parfaitement envisager de réaliser sur une installation telle que caractérisée par l'invention diverses opérations telles que la soudure d'une jambe sur un pied, la soudure d'une jambe et d'un pied sur une paraison, l'étirement d'une partie de l'article par déformation plastique à chaud, le polissage, par quelque moyen que ce soit, des « coutures », c'est-à-dire des traces indésirables laissées par le moulage à chaud sur les articles, le marquage des articles, la décoration des articles, le contrôle des articles.

On peut également aisément imaginer des configurations d'installation plus complexes, par exemple une installation qui serait composée de deux carrousels 2, dont les rotations soient corrélées mécaniquement ou par un pilotage adéquat des moteurs d'entraînement.

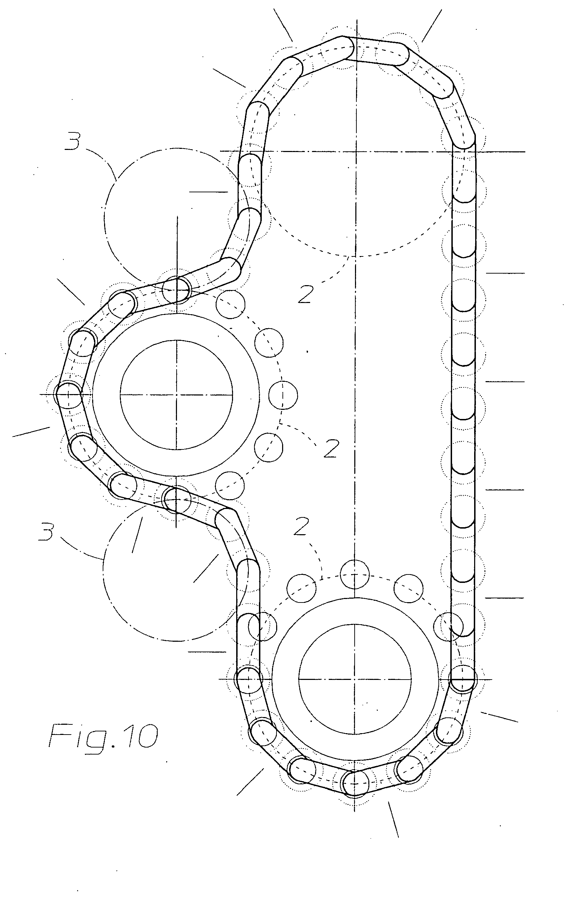

La figure 10 montre un autre exemple d'installation plus complexe constitué de trois carrousels 2 et de deux roues de renvoi 3.

## Revendications

1. Installation pour la réalisation d'opérations de mise en forme de pièces en verre ou en cristal (21), comprenant
- au moins une roue d'entraînement et au moins une roue de renvoi (3),
- un élément de support entraîné en circulation par ladite au moins une roue d'entraînement de manière à défiler autour de ladite au moins une roue de renvoi (3) et de ladite au moins une roue d'entraînement,
- des mandrins principaux (7) en un nombre prédéterminé qui sont supportés par l'élément de support et qui, en position active, maintiennent chacun une pièce en verre ou en cristal (21) par une première extrémité de celle-ci, et
- des postes de travail situés le long de l'élément de support en circulation, qui effectuent sur lesdites pièces en verre ou en cristal (21) les opérations de mise en forme,
**caractérisée en ce qu'**au moins une roue parmi ladite au moins une roue d'entraînement et ladite au moins une roue de renvoi est un carrousel (2) qui comporte des mandrins secondaires (8) en un nombre inférieur au nombre prédéterminé des mandrins principaux (7) et qui coopère, dans une zone de coopération, avec l'élément de support en défilement, et **en ce que**, dans cette zone de coopération, chaque mandrin secondaire (8) est agencé en opposition à un mandrin principal (7) sur un axe commun (23) et maintient une pièce en verre ou en cristal (21) par une deuxième extrémité de celle-ci, opposée à la première.

2. Installation suivant la revendication 1, **caractérisée en ce que** les mandrins principaux (7) sont montés sur l'élément de support et les mandrins secondaires (8) sur chaque carrousel (2) de manière à permettre, dans ladite zone de coopération, un déplacement relatif entre les mandrins opposés le long de leur axe commun (23), entre une position éloignée et une position rapprochée et inversement.

3. Installation suivant l'une des revendications 1 et 2, **caractérisée en ce que** les mandrins principaux (7) et les mandrins secondaires (8) agencés en opposition sont montés de manière à pouvoir être entraînés en rotation de manière synchrone autour de leur axe commun (23).

4. Installation suivant l'une quelconque des revendications 1 à 3, **caractérisée en ce que** l'élément de support est une chaîné transporteuse sans fin (4) et **en ce que** chaque carrousel (2) comporte des moyens de coopération (36) dans lesquels la chaîne transporteuse (4) s'engrène dans ladite zone de coopération.

5. Installation suivant l'une quelconque des revendications 1 à 4, **caractérisée en ce que** les postes de travail comprennent au moins un poste de découpage permettant un décalottage de la pièce en verre ou en cristal.

6. Installation suivant la revendication 5, **caractérisée en ce que** le poste de découpage comprend un dispositif à faisceau laser.

7. Installation suivant l'une des revendications 5 et 6, **caractérisée en ce qu'**elle comprend en outre, en amont du poste de découpage, au moins un poste de préchauffage des pièces à découper, et, en aval du poste de découpage, au moins un poste de polissage d'arête découpée.

8. Installation suivant l'une des revendications 5 à 8, **caractérisée en ce qu'**elle comprend en outre au moins un poste de contrôle de qualité, au moins un poste de marquage ou de décoration de la pièce usinée, au moins un poste de soudure et/ou un poste d'étirement par déformation à chaud.

9. Installation suivant l'une quelconque des revendications 1 à 8, **caractérisée en ce qu'**elle comprend un carrousel (2) unique, formé par une roue d'entraînement, et une roue de renvoi (3) unique.

## Claims

1. Installation for performing operations of forming glass or crystal pieces (21), comprising
- at least one drive wheel and at least one return wheel (3),
- a support element driven in circulation by the said at least one drive wheel so as to travel around the said at least one return wheel (3) and the said at least one drive wheel,
- a predetermined number of main chucks (7) that are supported by the support element and, in the active position, each hold a glass or crystal piece (21) by a first end thereof, and
- workstations situated along the circulating support element, which perform the forming operations on the said glass or crystal pieces (21),
**characterised in that** at least one wheel among the said at least one drive wheel and the said at least one return wheel is a carousel (2) that comprises secondary chucks (8) less in number than the predetermined number of main chucks (7) and cooperates, in a cooperation zone, with the travelling support element, and **in that**, in this cooperation zone, each secondary chuck (8) is arranged in opposition to a main chuck (7) on a common axis (23) and holds a glass or crystal piece (21) by a second end thereof, opposite to the first.

2. Installation according to claim 1, **characterised in that** the main chucks (7) are mounted on the support element and the secondary chucks (8) on each carousel (2) so as to allow, in the said cooperation zone, a relative movement between the opposite chucks along the common axis (23) between a distant position and a close position and vice versa.

3. Installation according to one of claims 1 and 2, **characterised in that** the main chucks (7) and the secondary chucks (8) arranged in opposition are mounted so as to be able to be driven in rotation synchronously about their common axis (23).

4. Installation according to any one of claims 1 to 3, **characterised in that** the support element is an endless conveyor chain (4) and **in that** each carousel (2) comprises cooperation means (36) in which the conveyor chain (4) meshes in the said cooperation zone.

5. Installation according to any one of claims 1 to 4, **characterised in that** the workstations comprise at least one cutting station for cracking off the glass or crystal piece.

6. Installation according to claim 5, **characterised in that** the cutting station comprises a laser beam device.

7. Installation according to one of claims 5 and 6, **characterised in that** it also comprises, upstream of the cutting station, at least one station pre-heating the pieces to be cut and, downstream of the cutting station, at least one cut-edge polishing station.

8. Installation according to one of claims 5 to 8, **characterised in that** it also comprises at least one quality control station, at least one station for marking or decorating the machined piece, at least one welding station and/or a station for stretching by hot deformation.

9. Installation according to any one of claims 1 to 8, **characterised in that** it comprises a single carousel (2), formed by a drive wheel, and a single return wheel (3).

## Patentansprüche

1. Vorrichtung zur Durchführung von Arbeitsgängen zum Formen von Glas- oder Kristallteilen (21), umfassend
- mindestens ein Antriebsrad und mindestens ein Umlenkrad (3),
- ein Stützelement, das zirkulierend von dem mindestens einen Antriebsrad angetrieben wird, um das mindestens eine Umlenkrad (3) und das mindestens eine Antriebsrad abzulaufen,
- Hauptdorne (7) in vorbestimmter Anzahl, die von dem Stützelement getragen werden und in aktiver Position jeweils einen Glas- oder Kristallteil (21) mit einem ersten Ende desselben halten, und
- Arbeitsstationen, die sich entlang des zirkulierenden Stützelements befinden und an den Glas- oder Kristallteilen (21) die Formungsarbeitsgänge durchführen,
**dadurch gekennzeichnet, dass** mindestens ein Rad unter dem mindestens einen Antriebsrad und dem mindestens einen Umlenkrad ein Karussellrad (2) ist, das Nebendorne (8) in geringerer Anzahl als die vorbestimmte Anzahl von Hauptdornen (7) umfasst und in einer Kooperationszone mit dem ablaufenden Stützelement zusammenwirkt, und dass in dieser Kooperationszone jeder Nebendorn (8) in Opposition zu einem Hauptdorn (7) auf einer gemeinsamen Achse (23) angeordnet ist und einen Glas- oder Kristallteil (21) an einem Ende desselben, das dem ersten gegenüber liegt, hält.

2. Vorrichtung nach Anspruch 1, **dadurch gekennzeichnet, dass** die Hauptdorne (7) auf dem Stützelement und die Nebendorne (8) auf jedem Karussellrad (2) montiert sind, um in der Kooperationszone eine relative Verschiebung zwischen den gegenüber liegenden Dornen entlang ihrer gemeinsamen Achse (23) zwischen einer entfernten Position und einer angenäherten Position und umgekehrt zu ermöglichen.

3. Vorrichtung nach einem der Ansprüche 1 und 2, **dadurch gekennzeichnet, dass** die Hauptdorne (7) und die in Opposition angeordneten Nebendorne (8) derart montiert sind, das sie in Drehung synchron um ihre gemeinsame Achse (23) angetrieben werden können.

4. Vorrichtung nach einem der Ansprüche 1 bis 3, **dadurch gekennzeichnet, dass** das Stützelement eine Förderschnecke (4) ist, und dass jedes Karussellrad (2) Kooperationsmittel (36) umfasst, in die Förderschnecke (4) in der Kooperationszone eingreift.

5. Vorrichtung nach einem der Ansprüche 1 bis 4, **dadurch gekennzeichnet, dass** die Arbeitsstationen mindestens eine Schneidstation umfassen, die eine Kuppelentfernung des Glas- oder Kristallteils ermöglicht.

6. Vorrichtung nach Anspruch 5, **dadurch gekennzeichnet, dass** die Schneidstation eine Vorrichtung mit Laserstrahl umfasst.

7. Vorrichtung nach einem der Ansprüche 5 und 6, **dadurch gekennzeichnet, dass** sie ferner stromaufwärts zur Schneidstation mindestens eine Vorwärmstation für die zu schneidenden Teile und stromabwärts zur Schneidstation mindestens eine Station zum Polieren der Schnittkante umfasst.

8. Vorrichtung nach einem der Ansprüche 5 bis 8, **dadurch gekennzeichnet, dass** sie ferner mindestens eine Qualitätskontrollstation, mindestens eine Station zum Markieren oder Verzieren des bearbeiteten Teils, mindestens eine Schweißstation und/oder eine Streckstation durch Heißverformung umfasst.

9. Vorrichtung nach einem der Ansprüche 1 bis 8, **dadurch gekennzeichnet, dass** sie ein einziges Karussellrad (2), das von einem Antriebsrad gebildet ist, und ein einziges Umlenkrad (3) umfasst.
